# EUROPÄISCHE PATENTSCHRIFT

(11) **EP 0 681 234 B1**
(45) Veröffentlichungstag und Bekanntmachung des Hinweises auf die Patenterteilung: **09.01.2002**
(21) Anmeldenummer: 95106471.6
(22) Anmeldetag: 25.04.1995
(51) Int. Cl.: G06F 7/00

(54) **Verfahren zur Fuzzy-Inferenz in einem Fuzzy-Regelkreis**
Method for fuzzy inference in a fuzzy control circuit
Procédé pour l'inférence floue dans un circuit de commande flou

(30) Priorität: 04.05.1994 DE 4415693
(43) Veröffentlichungstag der Anmeldung: 08.11.1995
(73) Patentinhaber: DEUTSCHE THOMSON-BRANDT GMBH, 78048 Villingen-Schwenningen (DE)
(72) Erfinder: Mager, Klaus, D-78073 Bad Dürrheim (DE)

(56) Entgegenhaltungen:
- EP-A- 0 471 843
- DE-C- 4 238 772
- PROCEEDINGS OF THE IEEE, Bd. 82, Nr. 4, April 1994 NEW YORK US, Seiten 482-497, XP 000451411 D. SCHWARTZ ET AL. 'Applications of Fuzzy Sets and Approximate Reasoning'

## Beschreibung

Die Erfindung betrifft ein Verfahren zur Fuzzy-Inferenz in einem Fuzzy-Regelkreis.

In "Der Elektroniker", Nr. 3, 1990 ist auf Seite 39-43 ein Aufsatz von Günter Trautzl mit dem Titel "Unscharfe Logik: Fuzzy Logik" erschienen.

Für den Begriff unscharfe Logik sind neben der Bezeichnung Fuzzy Logik noch die Namen Rule-Based-System, Ambivalente Logik und mehrwertige Logik gebräuchlich.

Die unscharfe Logik wurde bereits 1965 entwickelt, um auch nicht genaue und unvollständige Datensätze verarbeiten zu können. Es werden Meßwerte mit linguistischen Variablen anstelle mit Zahlen beschrieben. Für die linguistischen Variablen werden Fuzzy-Mengen eingeführt, zum Beispiel positiv groß, positiv mittel, positiv klein, etwa null, negativ klein etc. Die Fuzzy-Menge ist durch ihre Zugehörigkeitsfunktion, häufig auch als membership-Funktion bezeichnet, definiert.

Die Zugehörigkeitsfunktion gibt an, zu welchem Grad ein Element aus dem Wertebereich in der Menge enthalten ist. Eine Regelstrategie wird durch Verknüpfung der linguistischen Variablen in ihren Fuzzy-Mengen realisiert.

Das Stellsignal wird anhand einfacher Wenn-Dann-Regeln erzeugt. Die folgende beispielhafte Regelstrategie wird in der Fuzzy-Regelung verwendet.

### Erste Regel:

Wenn die Eingangsgröße des Reglers negativ klein ist und gleichzeitig die Änderung der Eingangsgröße des Reglers positiv klein ist, dann ist die Stellgröße positiv klein.

### Zweite Regel:

Wenn die Eingangsgröße des Reglers negativ klein ist und die Änderung der Eingangsgröße positiv groß ist, dann ist die Stellgröße negativ klein.

### Dritte Regel:

Wenn die Eingangsgröße des Reglers etwa Null ist und die Änderung der Eingangsgröße positiv klein ist, dann ist die Stellgröße negativ klein.

### Vierte Regel:

Wenn die Eingangsgröße des Reglers etwa Null ist und die Änderung der Eingangsgröße positiv groß ist, dann ist die Stellgröße negativ groß.

Als Ergebnis der Verknüpfung entsteht eine unscharfe linguistische Stellgröße, die in eine scharfe physikalische Größe umzuwandeln ist. Gemäß dem Stand der Technik wird hierzu der Schwerpunkt der unscharfen Ausgangsgröße ermittelt, dessen Berechnung verhältnismäßig viel Zeit benötigt, weil viele Multiplikationen und eine Division durchgeführt werden müssen. Die Berechnung des Stellwertes aus der unscharfen Menge wird auch als Defuzzyfizierung bezeichnet.

Aus der EP-A-0 471 843 ist ein Fuzzy-Regler bekannt, der mit vier Eingangsgrößen arbeitet und zwei Ausgangsvariablen liefert. Die allgemeine Struktur des Reglers mit einem Satz von Wenn-Dann-Regeln ist daraus ebenfalls bekannt. In einer Ausführungsform des dort beschriebenen Fuzzy-Regelkreises kommt der zweiten Ausgangsvariablen O₂ nur zwei mögliche linguistische Werte, nämlich "negativ" und "positiv" zu. Die diesen Werten zugehörigen Zugehörigkeitsfunktionen erstrecken sich jeweils aber über den kompletten Ausgangswertebereich der zweiten Ausgangsvariablen und überlappen sich daher. Eine feste Einteilung der Wenn-Dann-Regeln in "positive" und "negative" Regeln findet deshalb bei dem dort beschriebenen Fuzzy-Regler nicht statt.

Es ist Aufgabe der Erfindung, ein Verfahren zur Fuzzy-Inferenz in einem Fuzzy-Regelkreis anzugeben, daß sich aufwandsgünstig implementieren läßt, so daß dann auch ein schnellerer Regelzyklus ermöglicht wird, ohne die restlichen Reglereigenschaften wesentlich negativ zu beeinflussen.

Die Erfindung löst diese Aufgabe mit den Maßnahmen des Anspruchs 1. Vorteilhafte Wenn-Dann-Regeln sind in dem abhängigen Anspruch aufgelistet.

Wie erwähnt, geht die Erfindung von dem Gedanken aus, die Stellgröße nur noch in die beiden Zustände "positiv" und "negativ" einzuteilen und nicht mehr wie beim Stand der Technik in beliebige Zustände, wie zum Beispiel "positiv klein", "negativ klein "sowie "negativ groß." Diese Maßnahme hat den Vorteil, daß die Defuzzyfizierung nun nur durch Subtraktion und nicht mehr durch eine Reihe von Multiplikationen und einer Division durchführbar wird. Dadurch wird viel Zeit gespart; der Regler wird wesentlich schneller weil der Rechenaufwand für Subtraktionen wesentlich geringer ist als für Multiplikationen und Divisionen. Trotzdem bleiben die Vorteile eines Fuzzy-Regelkreises erhalten.

Es zeigen:
- Figur 1: Zugehörigkeitsfunktionen eines bekannten Fuzzy-Regelkreises
- Figur 2: Zugehörigkeitsfunktionen eines erfindungsgemäßen Regelkreises
- Figur 3: ein Ausführungsbeispiel der Erfindung.

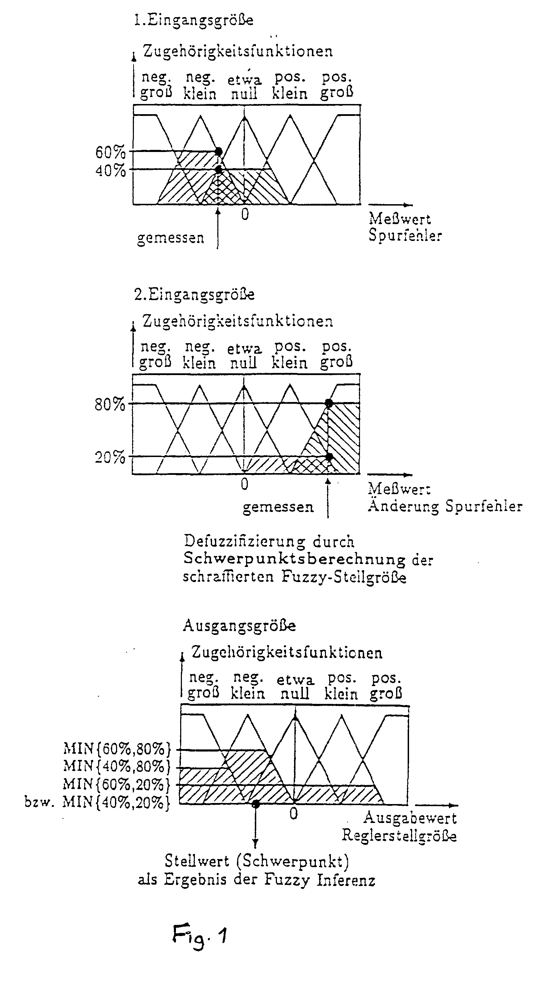

Figur 1 zeigt die Zugehörigkeitsfunktionen einer ersten und einer zweiten Eingangsgröße sowie der daraus berechneten Ausgangsgrößen. Die Defuzzyfizierung erfolgt durch Schwerpunktberechnung der schraffierten Flächen in den Diagrammen.

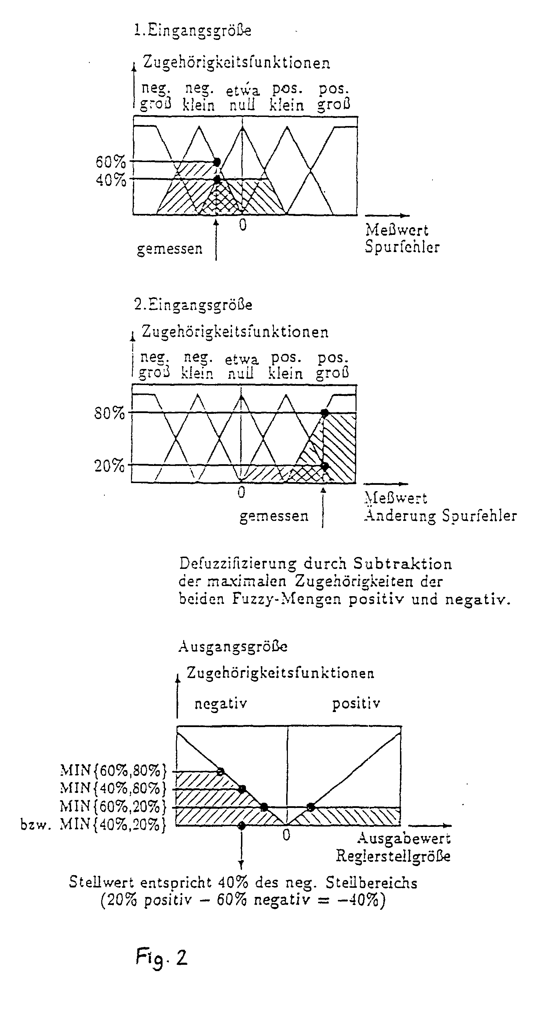

In Figur 2 sind die Zugehörigkeitsfunktionen gemäß der Erfindung abgebildet. Die Defuzzyfizierung erfolgt durch Subtraktion der maximalen Zugehörigkeiten der beiden Mengen "positiv" und "negativ".

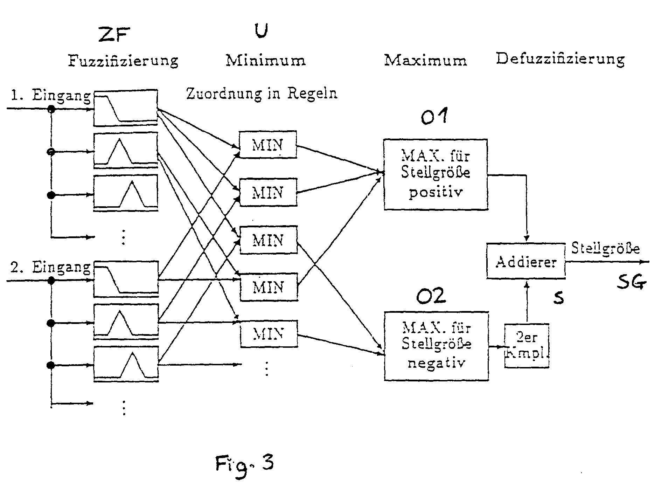

In Figur 3 ist ein Ausführungsbeispiel der Erfindung gezeigt.

Die erste und die zweite Eingangsgröße des Reglers werden einer Gruppe von Blöcken ZF zugeführt, wo die Zugehörigkeitsfunktionen abgelegt sind. Die Ausgänge dieser Blöcke ZF sind mit den Eingängen eines Netzwerkes U aus Vergleichern und Multiplexern verbunden, wo die Minimum-Verknüpfungen gemäß den Regeln durchgeführt werden. Die Ausgänge des Netzwerkes U sind mit den Eingängen eines Netzwerkes O1 und eines Netzwerkes 02 verbunden. In den beiden Netzwerken O1 und 02 werden die Maximum-Verknüpfungen gemäß den Regeln durchgeführt. Es wird für die Stellgröße gemäß der Erfindung jedoch nur zwischen "positiv" und "negativ" unterschieden. Weitere Zustände wie zum Beispiel positiv klein, positiv groß, positiv mittel, negativ klein, negativ groß, negativ mittel sind nicht vorgesehen. Die Ausgänge der beiden Netzwerke O1 und 02 sind mit den Eingängen eines Subtrahierers S verbunden, an dessen Ausgang die scharfe Stellgröße SG abnehmbar ist.

Bei der Erfindung ist anstelle von Multiplikatoren und Teilern der Subtrahierer S vorgesehen. Durch diese Maßnahme wird die Rechenzeit zur Berechnung der Stellgröße erheblich vermindert. Multiplikatoren und Dividierer, die beim Stand der Technik anstelle des Subtrahierers vorgesehen sind, erfordern eine wesentlich höhere Rechenzeit zur Schwerpunktberechnung.

Der erfindungsgemäße Fuzzy-Regelkreis läßt sich aus Vergleichern, Multiplexern und Subtrahierern leicht aufbauen. Die Erfindung stellt daher im Vergleich zu bekannten Fuzzy-Prozessoren eine sehr einfache und kostengünstige Realisierung eines Fuzzy-Regelkreises dar.

## Patentansprüche

1. Verfahren zur Fuzzy-Inferenz für einen Fuzzy-Regelkreis, wobei für den Regelkreis zwei Eingangsvariablen und eine Ausgangsvariable vorgesehen sind, wobei jede Eingangsvariable eine linguistische Variable ist, mit mehreren zugehörigen linguistischen Wertebeschreibungen, wobei zu jeder Eingangsvariablen eine erste Zugehörigkeitsfunktion zu jedem linguistischen Wert gehört, wobei für die Regelschleife ein Satz von Wenn-Dann-Regeln definiert ist, wobei die Wenn-Dann-Regeln nur in "positive" und "negative" Wenn-Dann-Regeln eingeteilt sind, abhängig davon, ob in dem Dann-Zweig das Merkmal "positiver" Wert oder "negativer" Wert der Ausgangsvariablen zugewiesen wird, wobei in der Regelschleife jeder "positiven" Wenn-Dann-Regel eine zweite Zugehörigkeitsfunktion zugeordnet ist und jeder "negativen" Wenn-Dann-Regel eine dritte Zugehörigkeitsfunktion zugewiesen ist, wobei sich die zweite und dritte Zugehörigkeitsfunktionen auf jeweils die Hälfte des Ausgangswertebereichs erstreckt, mit den Schritten:
a) Bestimmen der relevanten linguistischen Werte zu den Meßwerten der Eingangsvariablen basierend auf den zugehörigen ersten Zugehörigkeitsfunktionen,
b) Anwendung der Wenn-Dann-Regeln auf die relevanten linguistischen Werte der Eingangsvariablen,
c) Bestimmen des Minimum-Zugehörigkeitswertes für jede Wenn-Dann-Regel,
d) Von den Minimum-Zugehörigkeitswerten Bestimmen des maximalen Zugehörigkeitswertes von allen "negativ" klassifizierten Wenn-Dann-Regeln und des maximalen Zugehörigkeitswertes der "positiv" klassifierten Wenn-Dann-Regeln,
e) Abziehen des maximalen Zugehörigkeitswertes von allen "negativ" klassifizierten Wenn-Dann-Regeln von dem maximalen Zugehörigkeitswert der "positiv" klassifierten Wenn-Dann-Regeln, mittels eines Subtrahieres, und damit Zuordnen des scharfen Wertes für die Ausgangsvariable mit Hilfe der zweiten oder dritten Zugehörigkeitsfunktion.

2. Verfahren nach Anspruch 1, worin die zweite Eingangsvariable den Wert der Änderung der ersten Eingangsvariablen in einem Meßintervall angibt, wobei der Satz von Wenn-Dann-Regeln die folgenden Regeln enthält:
i) wenn die erste Eingangsvariable im Bereich "negativ klein" ist und die Änderung der Eingangsgröße im Bereich "positiv groß" ist, dann wird der Ausgangsvariablen der Bereich "positiv" zugeordnet,
ii) wenn die erste Eingangsvariable im Bereich "negativ klein" ist und die zweite Eingangsvariable im Bereich "positiv groß" liegt, dann wird der Ausgangsvariablen der Bereich "negativ" zugeordnet,
iii) wenn die erste Eingangsgröße des Reglers in dem Bereich "etwa Null" ist und die zweite Eingangsgröße in dem Bereich "positiv klein" ist, dann wird der Ausgangsvariablen der Wert "negativ" zugewiesen,
iv) wenn die erste Eingangsgröße des Reglers in dem Bereich "etwa Null" ist und die zweite Eingangsgröße in dem Bereich "positiv groß" ist, dann wird der Ausgangsvariablen der Wert "negativ" zugewiesen.

## Claims

1. Method for fuzzy inference for a fuzzy control loop wherein two input variables and one output variable are provided for the control loop, wherein each input variable is a linguistic variable, including a plurality of associated linguistic value-descriptions, wherein a first membership function belongs to each input variable for each linguistic value, wherein a set of if-then-rules is defined for said control loop, wherein the if-then-rules are divided only into "positive" and "negative" if-then-rules depending from whether in the then-branch the feature "positive" value or "negative" value is assigned to the output variable, wherein within the control loop a second membership function is assigned to each "positive" if-then-rule and a third membership function is assigned to each "negative" if-then-rule, wherein the second and third membership function extends in each case to half the output value range, comprising the following steps:
a) defining the relevant linguistic values for the measured values of the input variable basing on the accompanying first membership functions,
b) employing the if-then-rules for the relevant linguistic values of the input variable,
c) defining the minimum membership value for each if-then-rule,
d) defining the maximum membership value of all "negatively" classified if-then-rules and the maximum membership value of the "positively" classified if-then-rules, from the minimum membership values,
e) subtracting the maximum membership value of all "negatively" classified if-then-rules from the maximum membership value of the "positively" classified if-then-rules by means of a subtractor and thereby assigning the sharp value for the output variable by means of the second or third membership function.

2. Method according to claim 1 wherein the second input variable indicates the value of the change of the first input variable within a measuring interval, wherein the set of if-then-rules includes the following rules:
i) if the first input variable is low within the region "negatively small" and the change of the input variable is within region "positively large", then the region "positive" is assigned to the output variable,
ii) if the first input variable is within the region "negatively small" and the second input variable lies within the region "positively large", then the region "negative" is assigned to the output variable,
iii) if the first input variable of the controller lies within the region "approximately zero" and the second input variable is within the region "positively low", then the value "negative" is assigned to the output variable,
iv) if the first input variable of the controller is within the region "approximately zero" and the second input variable is within the region "positively large", then the value "negative" is assigned to the output variable.

## Revendications

1. Procédé pour l'inférence floue dans un circuit de commande flou dans lequel (i) deux variables d'entrée et une variable de sortie sont prévues pour le circuit de commande, (ii) chaque variable d'entrée est une variable linguistique dotée de plusieurs descriptions de valeurs intrinsèques, (iii) une première fonction d'appartenance sur chaque valeur linguistique appartient à chaque variable d'entrée, (iv) une phrase des règles "Si-alors" est définie pour la boucle de réglage, (v) les règles "Si-alors" sont classées uniquement en règles "Si-alors" positives et négatives, selon que dans la partie "Alors" la valeur "positive" ou "négative" est affectée aux variables de sortie, (vi) dans la boucle de réglage, une deuxième fonction d'appartenance est affectée à chaque règle "Si-alors" positive et une troisième à chaque règle "Si-alors" négative, (vii) les deuxième et troisième fonctions d'appartenance s'étendent sur la moitié du domaine de valeurs de sortie. Etapes :
a) Identification des valeurs linguistiques importantes par rapport aux valeurs de mesure des variables d'entrée sur la base des premières fonctions d'appartenance intrinsèques.
b) Application des règles "Si-alors" aux valeurs linguistiques importantes des variables d'entrée.
c) Identification de la valeur d'appartenance minimale pour chaque règle "Si-alors".
d) A partir des valeurs d'appartenance minimales, identification de la valeur d'appartenance maximale de toutes les règles "Si-alors" classées négatives et positives.
e) Retrait de la valeur d'appartenance maximale de toutes les règles "Si-alors" classées "négatives" de la valeur d'appartenance maximale des règles "Si-alors" classées "positives" à l'aide d'un soustracteur, et affectation de la valeur précise pour la variable de sortie à l'ide de la deuxième ou troisième fonction d'appartenance.

2. Procédé conforme à la revendication 1 dans lequel la deuxième variable d'entrée indique la valeur de la modification de la première variable d'entrée dans un intervalle de mesure et où la phrase des règles "Si-alors" contient les règles suivantes :
i. Si le domaine de la première variable d'entrée est "négatif/petit" et celui de la modification de la valeur d'entrée "positif/grand", alors le domaine "positif" est affecté à la variable de sortie.
ii. Si le domaine de la première variable d'entrée est "négatif/petit" et celui de la deuxième variable d'entrée "positif/grand", alors le domaine "négatif" est affecté à la variable de sortie.
iii. Si le domaine de la première valeur d'entrée du régulateur est "presque nul" et celui de la deuxième valeur d'entrée "positif/petit", alors la valeur "négatif" est affectée aux variables de sortie.
iv. Si le domaine de la première valeur d'entrée du régulateur est "presque nul" et celui de la deuxième valeur d'entrée "positif/grand", alors la valeur "négatif" est affectée aux variables de sortie.
